# EUROPÄISCHE PATENTANMELDUNG

(11) **EP 4 635 836 A1**
(43) Veröffentlichungstag der Anmeldung: **22.10.2025**
(21) Anmeldenummer: 24171106.8
(22) Anmeldetag: 18.04.2024
(51) Int. Cl.: B62K 19/02, B62K 19/18, B62K 19/30, B62K 19/16

(54) **VERFAHREN ZUR HERSTELLUNG EINES RAHMENSYSTEMS SOWIE RAHMENSYSTEM FÜR ZWEIRÄDER**

(71) Anmelder: Universität Kassel (Körperschaft d. öffentlichen Rechts), 34125 Kassel (DE)
(72) Erfinder: Arimont, Jonas, 34130 Kassel (DE); Fehlbier, Martin, 34225 Baunatal (DE)
(74) Vertreter: Walther Bayer Faber Patentanwälte PartGmbB

(57) **Zusammenfassung**

Gegenstand der Erfindung ist ein Verfahren zur Herstellung eines Rahmensystems (1) für Zweiräder und ein solches Rahmensystem (1), wobei das Rahmensystem (1) in der Grundstruktur aus einer ersten Rahmenhalbschale (10) und einer zweiten Rahmenhalbschale (11) gebildet wird, die stoffschlüssig miteinander verbunden werden, wobei das Verfahren wenigstens die folgenden Schritte aufweist: Ausgestalten von Aufnahmeabschnitten (12) als einteiliger Abschnitt an wenigstens einer Rahmenhalbschale (10, 11); Bereitstellen oder Erzeugen wenigstens eines Einsatzelementes (13) zur Aufnahme von Anbauteilen an das Rahmensystem (1); Anordnen der ersten Rahmenhalbschale (10) und der zweiten Rahmenhalbschale (11) aneinander, wobei wenigstens einer der Aufnahmeabschnitte (12) das Einsatzelement (13) wenigstens abschnittsweise außenseitig umschließt und Erzeugen einer stoffschlüssigen Verbindung (14) a) zwischen dem Aufnahmeabschnitt (12) und dem Einsatzelement (13) und b) zwischen den beiden Rahmenhalbschalen (10, 11).

## Beschreibung

Die Erfindung betrifft ein Verfahren zur Herstellung eines Rahmensystems für Zweiräder, wobei das Rahmensystem in der Grundstruktur aus einer ersten Rahmenhalbschale und einer zweiten Rahmenhalbschale gebildet wird, die stoffschlüssig miteinander verbunden werden. Die Erfindung richtet sich weiterhin auf ein solches Rahmensystem, hergestellt mit dem vorgestellten Verfahren.

### STAND DER TECHNIK

Aus der EP 0 102 347 B1 ist ein Verfahren zur Herstellung eines Rahmensystems für Zweiräder bekannt, wobei das Rahmensystem in der Grundstruktur aus einer ersten Rahmenhalbschale und einer zweiten Rahmenhalbschale gebildet wird. Die überlappenden Ränder der Rahmenhalbschalen werden dabei verklebt, nachteilig ist jedoch eine insgesamt geringe mechanische Festigkeit des Rahmensystems, wenn die beiden Rahmenhalbschalen nur über ihren Randkontakt stoffschlüssig miteinander verbunden werden, da zumindest nur eine Stoßverbindung gefügt werden kann. Daher bedient man sich zumeist einem Aufbau eines Rahmensystems basierend aus Rohren, die an den Knotenpunkten in Muffen eingeschoben und beispielsweise in diesen verlötet werden. Die Knotenpunkte bilden sodann auch die Bauteile, an denen die Anbauteile an das Rahmensystem angebracht werden, beispielsweise zur Aufnahme eines Steuersatzes, eines Tretlagers oder zur Aufnahme des Hinterrades. Ein Beispiel hierzu zeigt auch die die EP 0 184 430 B1.

Verfahren zur Herstellung eines Rahmensystems basierend auf Rohren und Muffen, wobei die Muffen die entsprechenden Knotenpunkte bilden, sind vielfach bekannt, beispielsweise aus der EP 0 587 927 A1, US 5,624,519 A, US 2020 010 140 A1, WO 23 087655 A1 oder die DE 10 2018 214 225 A1.

Geschweißte, gelötete oder geklebte Rohrverbindungen an zugeordneten Muffen zur Bildung eines Rahmensystems für ein Zweirad weisen den Nachteil auf, dass solche Rahmensysteme aus einer großen Anzahl von Einzelteilen bestehen, und die zumeist stoffschlüssigen Verbindungen zwischen den Rohren und Muffen sind nur bedingt hinreichend fest und zudem optisch wenig hochwertig. Die Muffen selbst sind komplexe Bauteile, die meist erst im Anschluss spanend bearbeitet werden, wobei spanend zu bearbeitende Bauteile besonders dann vorteilhaft sind, wenn diese rotationssymmetrisch ausgebildet werden können, was mit den Muffen nicht möglich ist. Muffen, die Knotenpunkte zur Aufnahme von Rohren bilden, um einen Rahmen eines Zweirades herzustellen, können insofern nicht auf einfache Weise spanend bearbeitet werden.

Werden zwei Rahmenhalbschalen vorgesehen, wie aus der US 0 102 347 B1 bekannt, so ergibt sich auch hier eine zu geringe Festigkeit der einfachen Fügeverbindung zwischen den miteinander stoffschlüssig verbundenen Rändern der Rahmenhalbschalen. Diese reine Stoßverbindung muss zusätzlich verstärkt werden, beispielsweise über vernietbare Zapfen oder dergleichen. Dadurch erhöht sich jedoch wieder die Komplexität des Rahmensystems für Zweiräder, also beispielsweise für Fahrräder, eBikes oder gegebenenfalls auch für Motorräder.

### OFFENBARUNG DER ERFINDUNG

Die Aufgabe der Erfindung ist die Verbesserung eines Verfahrens zur Herstellung eines Rahmensystems für Zweiräder sowie ein solches Rahmensystem, das aus zwei Halbschalen hergestellt werden kann, und das eine hinreichende Festigkeit aufweist. Dabei sollten insbesondere die Elemente zur Aufnahme von Anbauteilen an das Rahmensystem einfach ausgebildet werden können. Zudem soll eine stoffschlüssige Verbindung zwischen den Rahmenhalbschalen angewendet werden können, ohne dass weitere Zapfen, Nieten oder sonstige einzelne Verbindungselemente erforderlich werden.

Diese Aufgabe wird ausgehend von einem Verfahren zur Herstellung eines Rahmensystems gemäß dem Oberbegriff des Anspruchs 1 und ausgehend von einem Rahmensystem für Zweiräder gemäß dem Oberbegriff des Anspruchs 11 mit den jeweils kennzeichnenden Merkmalen gelöst. Vorteilhafte Weiterbildungen der Erfindung sind in den abhängigen Ansprüchen angegeben.

Das erfindungsgemäße Verfahren sieht zur Lösung der vorgenannten Aufgabe wenigstens die folgenden Verfahrensschritte vor: Ausgestalten von Aufnahmeabschnitten als einteiliger Abschnitt an wenigstens einer Rahmenhalbschale; Bereitstellen oder Erzeugen wenigstens eines Einsatzelementes zur Aufnahme von Anbauteilen an das Rahmensystem; Anordnen der ersten Rahmenhalbschale und der zweiten Rahmenhalbschale aneinander, wobei wenigstens einer der Aufnahmeabschnitte das Einsatzelement wenigstens abschnittsweise außenseitig umschließt und Erzeugen einer stoffschlüssigen Verbindung zwischen dem Aufnahmeabschnitt und dem Einsatzelement und zwischen den beiden Rahmenhalbschalen.

Kern der Erfindung ist die Erzeugung einer großen Fügefläche zur Bildung der stoffschlüssigen Verbindung zwischen zumindest einem Aufnahmeabschnitt und dem Außenumfangsabschnitt des Einsatzelementes, sodass die Einsatzelemente einzeln bereitgestellt werden können, diese also beispielsweise auf einfache Weise zuvor spanend bearbeitet werden können. Zudem dienen die Einsatzelemente zur größerflächigen stoffschlüssigen Verbindung zum Aufnahmeabschnitt an der wenigstens einen Rahmenhalbschale. So müssen die Rahmenhalbschalen nicht lediglich über ihren Rand, also dem einfachen Stoß, miteinander gefügt werden, sondern der wenigstens eine Aufnahmeabschnitt als Teil der Rahmenhalbschale, insbesondere sogar mehrere Aufnahmeabschnitte an den Rahmenhalbschalen, führen zu größerflächigen stoffschlüssigen Verbindung zum jeweiligen Einsatzelement, wodurch eine hohe Festigkeit des Rahmensystems erzeugt wird, ohne dass weitere Verbindungsmittel angewendet werden müssen, um die Rahmenhalbschalen miteinander zu verbinden und eine höhere Verbindungsfestigkeit zu schaffen.

Selbstverständlich können die Aufnahmeabschnitte zum Einsatzelement und zusätzlich auch die Rahmenhalbschalen zueinander stoffschlüssig verbunden werden, um die Verbindungsfestigkeit noch weiter zu erhöhen, und um den Hohlraum, der zwischen den beiden gefügten Rahmenhalbschalen schließlich gebildet wird, abzudichten.

Vorteilhafterweise werden die erste Rahmenhalbschale und/oder die zweite Rahmenhalbschale mittels einem Urformverfahren hergestellt, insbesondere mit dem die Aufnahmeabschnitte als einteiliger Abschnitt an wenigstens einer Rahmenhalbschalen ausgebildet werden, vorzugsweise an beiden Rahmenhalbschalen. Die Herstellung der Rahmenhalbschalen im Urformverfahren betrifft beispielsweise ein Metall-Druckgussverfahren oder ein Kunststoff-Spritzgussverfahren. Anverwandte Verfahren hierzu sind ebenfalls denkbar, beispielsweise ein Thixoforming, das als Verfahren unter dem Dach der Urformverfahren in der Metallverarbeitung ebenfalls etabliert ist, und Vorteile der Gießverfahren und Schmiedeverfahren miteinander vereint. So können auch innere Strukturen der Rahmenhalbschalen eingerichtet werden, beispielsweise Versteifungsrippen oder dergleichen, und es können Kanäle vorgesehen werden, durch die später Seilzüge, Hydraulikleitungen und dergleichen geführt werden können.

Die stoffschlüssige Verbindung zwischen dem Aufnahmeabschnitt und dem Einsatzelement und/oder zwischen den beiden Rahmenhalbschalen können mittels einer Klebeverbindung, einer Schweißverbindung oder einer Lötverbindung gebildet werden. Die Aufnahmeabschnitte an den Rahmenhalbschalen sind mit einer Innenkontur versehen, die komplementär ausgebildet ist zur Außenkontur des jeweiligen Einsatzelementes, sodass ein Fügespalt zwischen dem Aufnahmeabschnitt und dem Umfangsabschnitt des Einsatzelementes entsteht, der eine sehr gute Fügefestigkeit über eine stoffschlüssige Verbindung ermöglicht. Die Einsatzelemente können vorzugsweise rotationssymmetrisch ausgebildet sein, also beispielsweise im Drehprozess hergestellt werden, es ist jedoch auch denkbar, dass das Einsatzelement eine Quaderform oder dergleichen aufweist, beispielsweise zur Anbindung eines Dämpfers für eine Hinterachsdämpfung. Jedenfalls ist es vorteilhafterweise vorgesehen, die Innenkontur des Aufnahmeabschnittes an den Abschnitt des Einsatzelementes anzupassen, sodass ein gleichmäßiger Fügespalt entsteht.

Die beiden Rahmenhalbschalen werden vorzugsweise aus einem metallischen Werkstoff, also beispielsweise aus einer Aluminiumlegierung oder aus einem Kunststoff insbesondere im Spritzguss oder im Druckguss ausgebildet. Der Auswahl des Werkstoffes der Rahmenhalbschalen entsprechend kann auch die stoffschlüssige Verbindung ausgewählt werden, sodass beispielsweise metallische Werkstoffe vorzugsweise geschweißt oder gelötet werden können, wobei auch hier eine Klebeverbindung möglich ist, und sind die Rahmenhalbschalen aus einem Kunststoffwerkstoff hergestellt, wird als stoffschlüssige Verbindung bevorzugt eine Klebeverbindung ausgewählt.

Die Einsatzelemente werden insbesondere vor der Herstellung der Verbindung mit den Rahmenhalbschalen spanend bearbeitet, sodass die Einsatzelemente für die spätere Aufnahme von Anbauteilen entsprechend bereits fertiggestellt sind. Beispielsweise kann ein Einsatzelement das sogenannte Steuerrohr bilden, in dem später der Steuersatz aufgenommen werden kann, sodass die dafür notwendige Innenkontur zur Aufnahme beispielsweise der oberen und unteren Lagerschalen bereits fertig ist. Gleiches gilt für ein Einsatzelement, das zur Aufnahme einer Tretkurbellagerung ausgebildet ist. Ferner können die Einsatzelemente Durchbrüche für Steuerleitungen, Hydraulikleitungen und dergleichen aufweisen. Die Außenkontur der Einsatzelemente kann beispielsweise auch strukturiert werden, um die Festigkeit der stoffschlüssigen Verbindung zu erhöhen, oder die Außenkontur weist Flansche oder angeformte Kragen auf, um einen erweiterten Fügebereich zwischen dem Aufnahmeabschnitt an der Rahmenhalbschale und dem Einsatzelement zu erzeugen. Es sei auch angemerkt, dass bei der Dimensionierung der Einsatzelemente bezüglich der späteren Festigkeit die aussteifende Wirkung der Aufnahmeabschnitte berücksichtigt werden kann, sodass das Einsatzelement einzeln gesehen gegebenenfalls unterdimensioniert wird, aber in Fügeverbindung mit dem Aufnahmeabschnitt eine hinreichend dimensionierte Festigkeit aufweist.

Mit weiterem Vorteil können zwei an jeweiligen Rahmenhalbschalen ausgebildete Aufnahmeabschnitte beispielsweise so ausgestaltet und angeordnet werden, dass diese das Einsatzelement auf sich gegenüberliegenden Positionen insbesondere halbschalenförmig umschließen. Die Umschließung kann so vollständig erfolgen, dass selbst die jeweilige Abschlusskante der Aufnahmeabschnitte, die sich gegenüberliegen, ebenfalls stoffschlüssig verbunden werden können. So können beispielsweise zur Aufnahme eines Einsatzelementes, das als Steuerrohr dient, etwa jeweils 180° Umschließungswinkel aufweisen, sodass schließlich mit den zueinander gefügten Aufnahmeabschnitten eine Rohr-in-Rohr-Verbindung entsteht, da die beiden halbschalenförmigen Aufnahmeabschnitte um das Einsatzelement als Steuerrohr in ihrer Ergänzung selbst auch eine konzentrische Rohranordnung bilden. Ist das Einsatzelement rohrförmig ausgebildet, beispielsweise also auch zur Aufnahme einer Tretkurbellagerung, so können die beiden Aufnahmeabschnitte an den Rahmenhalbschalen jedoch auch in Längsrichtung des Rohrabschnittes zueinander gefügt werden.

Schließlich kann die Fügefestigkeit noch weiter erhöht werden, indem die beiden Rahmenhalbschalen mit einem inneren Überlapprand und einem äußeren Überlapprand hergestellt werden, die beim Verbinden der beiden Rahmenhalbschalen in eine gegenseitige Überlappung gebracht werden, sodass die stoffschlüssige Verbindung im Bereich der Überlappung ausgebildet wird. Die stoffschlüssige Verbindung verbindet dabei wenigstens den Bereich der Überlappung der Überlappränder, sodass auch dadurch ein flächiger Fügekontakt erzeugt wird, der größer ist als eine rein kopfseitige bzw. randseitige Stoßverbindung.

Ein weiterer Vorteil des erfindungsgemäßen Verfahrens liegt darin, dass die Einsatzelemente aus einem Werkstoff bereitgestellt werden können, der sich vom Werkstoff der beiden Rahmenhalbschalen unterscheidet. Beispielsweise können die beiden Rahmenhalbschalen aus einem Aluminiumwerkstoff, einem Verbundwerkstoff oder einem Kunststoffwerkstoff erzeugt werden, und die Einsatzelemente werden aus Stahl oder aus einem Buntmetall hergestellt.

Abweichend von als Einzelteil erst für das Fügen der Rahmenhalbschalen bereitgestellte Einsatzelemente kann es jedoch auch zweckdienlich sein, dass bereits im Urformverfahren das Einsatzelement mit einem der Aufnahmeabschnitte zumindest teilweise umgossen wird, indem das Einsatzelement vor dem Gießen in ein Urformwerkzeug eingelegt wird. Ein derartiges Verfahren funktioniert insbesondere dann, wenn der Schmelzpunkt des Werkstoffes des Einsatzelementes höher liegt als der Schmelzpunkt des Werkstoffes zur Bildung der Rahmenhalbschalen. Die Rahmenhalbschale wird in gewisser Weise an das Einsatzelement angegossen.

Alternativ dazu kann auch vorgesehen sein, dass das gesamte Einsatzelement im Urformverfahren bereits gemeinsam mit einem der Rahmenhalbschalen hergestellt wird. Bei dieser Vorgehensweise ergibt sich eine noch geringere Anzahl von Einzelteilen, sodass lediglich ein verbleibender Aufnahmeabschnitt der weiteren Rahmenhalbschale an das Einsatzelement angebracht wird, um die stoffschlüssige Verbindung herzustellen. Jedoch entsteht trotz der Verringerung der Einzelteile der Umstand, dass das Einsatzelement gegebenenfalls aufwendiger spanend bearbeitet werden muss, nachdem bereits das Einsatzelement gemeinsam mit der Rahmenhalbschale erzeugt wurde.

Zusammenfassend ergeben sich folglich drei Möglichkeiten zur Anordnung der Einsatzelemente an den Rahmenhalbschalen. Erstens können die Einsatzelemente an oder zwischen beiden Rahmenhalbschalen eingeklebt, eingeschweißt oder eingelötet werden, sodass insbesondere das Einsatzelement so bereitgestellt wird, dass sich dieses bei der Fügung der Rahmenhalbschalen aufeinander zwischen zwei Rahmenabschnitten befindet und mit eingeklebt werden kann. Zweitens kann das Einsatzelement im Gießprozess der Rahmenhalbschale mit umgossen werden, indem das Einsatzelement zuvor in ein Gießwerkzeug eingelegt wird, und die Rahmenhalbschale im Spritzguss oder Druckguss an das Einsatzelement angegossen wird. Drittens kann die Integration des Einsatzelementes im Gießprozess der Rahmenhalbschale selbst erfolgen, wofür Schieber oder Kerne verwendet werden können.

Die Erfindung richtet sich weiterhin auf ein Rahmensystem für Zweiräder mit einer ersten Rahmenhalbschale und einer zweiten Rahmenhalbschale, die stoffschlüssig miteinander verbunden sind, wobei an wenigstens einer Rahmenhalbschale zumindest ein Aufnahmeabschnitt als einteiliger Abschnitt an der Rahmenhalbschale ausgebildet ist, wobei wenigstens ein Einsatzelement zur Aufnahme von Anbauteilen an das Rahmensystem vorgesehen ist, das von dem zumindest einen Aufnahmeabschnitt wenigstens abschnittsweise außenseitig umschlossen ist, wobei zwischen dem Aufnahmeabschnitt und dem Einsatzelement und zwischen den beiden Rahmenhalbschalen eine stoffschlüssige Verbindung vorgesehen ist.

Mit weiterem Vorteil ist die stoffschlüssige Verbindung zwischen dem Aufnahmeabschnitt und dem Einsatzelement und/oder zwischen den beiden Rahmenhalbschalen mittels einer Klebeverbindung, einer Schweißverbindung oder einer Lötverbindung gebildet. Insbesondere ist vorgesehen, dass die beiden Rahmenhalbschalen aus einem metallischen Werkstoff, insbesondere aus einer Aluminiumlegierung, einem Verbundwerkstoff, also ein sogenannter Carbonwerkstoff, oder aus einem Kunststoff, insbesondere Spritzguss oder im Druckguss ausgebildet ist.

Schließlich ist es vorteilhaft, zwei an jeweiligen Rahmenschalen ausgebildete Aufnahmeabschnitte das Einsatzelement auf sich gegenüberliegenden Positionen insbesondere halbschalenförmig umschließen. An dem wenigstens einen Einsatzelement kann zumindest ein Flansch oder eine Hinterschneidung ausgebildet sein, um die Verbindungswirkung der stoffschlüssigen Verbindung zu verbessern.

### BEVORZUGTES AUSFÜHRUNGSBEISPIEL DER ERFINDUNG

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Figur 1: eine perspektivische Ansicht eines Rahmensystems mit noch nicht miteinander gefügten Rahmenhalbschalen sowie mehreren Einsatzelemente,
- Figur 2: das Rahmensystem gemäß Figur 1 mit einer gefügten Anordnung der beiden Rahmenhalbschalen und einer entsprechenden Einfassung der Einsatzelemente,
- Figur 3a: eine Detailansicht eines Aufnahmeabschnittes an einer Rahmenhalbschale mit einem vereinzelt dargestellten Einsatzelement,
- Figur 3b: die Rahmenhalbschale mit dem Aufnahmeabschnitt, in den das Einsatzelement eingefügt und stoffschlüssig verbunden ist,
- Figur 4: eine Darstellung eines Einsatzelementes, das einteilig mit dem Aufnahmeabschnitt und der Rahmenhalbschale hergestellt ist, wobei eine zweite Rahmenhalbschale beabstandet dargestellt ist.
- Figur 5: eine perspektivische Ansicht eines Teils des Rahmensystems mit zueinander gefügten Rahmenhalbschalen sowie einem eingefassten Einsatzelement,
- Figur 6: eine weitere Darstellung einer Rahmenhalbschale mit einem eingefügten Einsatzelement sowie einer innenseitigen Rippenstruktur in der Rahmenhalbschale,
- Figur 7a: ein weiteres Ausführungsbeispiel eines Rahmensystems mit zwei Rahmenhalbschalen und mehreren Aufnahmeabschnitten sowie mehreren diesen zugeordneten Einsatzelementen in einer Explosionsdarstellung und
- Figur 7b: das weitere Rahmensystem gemäß Figur 7a in einer Anordnung, in der die Rahmenhalbschalen zueinander zugefügt sind und in der die Einsatzelemente zwischen den Aufnahmeabschnitten der Rahmenhalbschalen stoffschlüssig eingefügt sind.

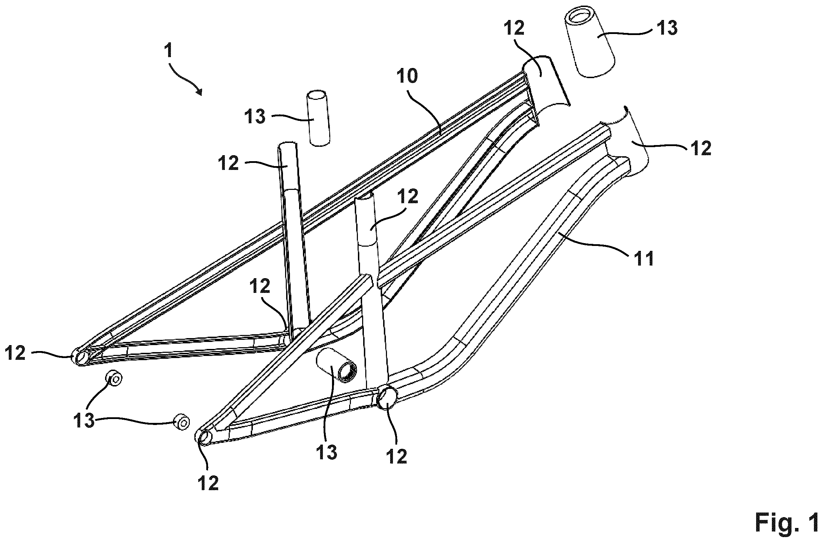

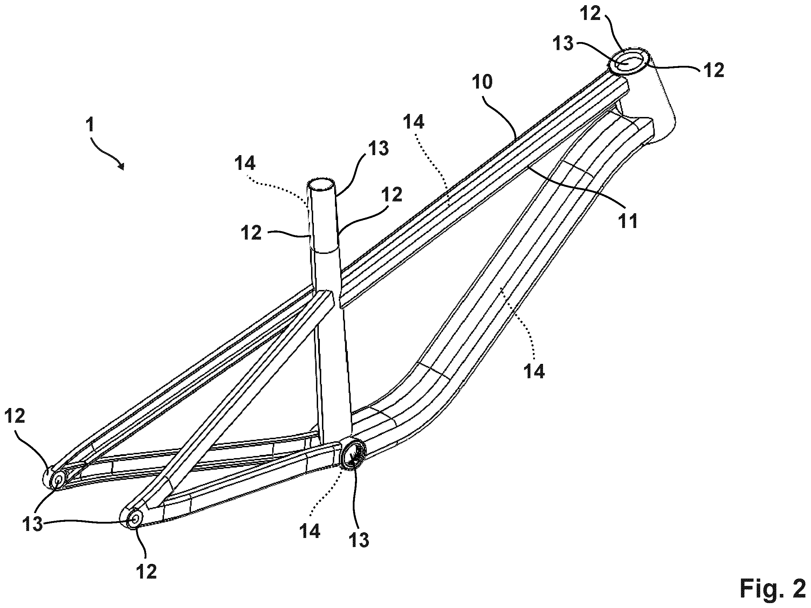

In Figur 1 ist ein Rahmensystem 1 in einer Explosionsdarstellung gezeigt, sodass eine erste Rahmenhalbschale 10 und eine zweite Rahmenhalbschale 11 beabstandet zueinander dargestellt sind. Die Rahmenhalbschalen 10 und 11 weisen mehrere Aufnahmeabschnitte 12 auf. Weiterhin sind mehrere Einsatzelemente 13 in Anordnung zwischen den Aufnahmeabschnitten 12 gezeigt, beispielsweise zur Aufnahme einer Hinterachse, einer Tretkurbellagerung, einer Sattelstange oder eines Steuersatzes. An den beiden Rahmenhalbschalen 10 und 11 sind Aufnahmeabschnitte 12 angeformt, die eine Innenkontur aufweisen, die der Außenkontur der Einsatzelemente 13 zumindest in dem Bereich angepasst ist, die beim Zusammenfügen der beiden Rahmenhalbschalen 10 und 11 mit dem Außenumfangsbereich der Einsatzelemente 13 in Anlage gelangen. Werden nun die beiden Rahmenhalbschalen 10 und 11 aufeinander gebracht und stoffschlüssig miteinander verbunden, so werden die Einsatzelemente 13 in den Aufnahmeabschnitten 12 eingefasst. Dabei wird auch eine stoffschlüssige Verbindung zwischen den Aufnahmeabschnitten 12 und den Einsatzelementen 13 erzeugt, wobei zusätzlich auch eine stoffschlüssige Verbindung zwischen den ersten und zweiten Rahmenhalbschalen 10 und 11 erfolgen kann. Ein Rahmensystem 1 mit zueinander gefügten Rahmenhalbschalen 10, 11 zeigt Figur 2.

In Figur 2 ist das Rahmensystem 1 gemäß der Explosionsdarstellung in Figur 1 nun in einem gefügten Zustand gezeigt. Die erste Rahmenhalbschale 10 und die zweite Rahmenhalbschale 11 sind aneinander angeordnet und mit einer stoffschlüssigen Verbindung 14 miteinander verbunden, beispielsweise verklebt, verlötet oder verschweißt. Zugleich umschließen die Aufnahmeabschnitte 12 an den Rahmenhalbschalen 10, 11 die Einsatzelemente 13, wobei insbesondere zwischen den Innenseiten der Aufnahmeabschnitte 12 und der Außenseite des jeweiligen Einsatzelementes 13 ebenfalls die stoffschlüssige Verbindung 14 hergestellt wurde, also beispielsweise eine Klebeverbindung, eine Lötverbindung oder dergleichen. Damit wird ein Rahmensystem 1 auf einer minimalen Anzahl von Einzelteilen aufgebaut, und durch die zusätzlichen größerflächigen stoffschlüssigen Verbindungen 14 zwischen den Aufnahmeabschnitten 12 und den Einsatzelementen 13 entsteht eine hohe Festigkeit des gesamten Rahmensystems 1 trotz einer verringerten Anzahl von Einzelteilen. Die Rahmenhalbschalen 10 und 11 sind dabei vorteilhafterweise in einem Urformverfahren hergestellt, beispielsweise in einem Druckgussverfahren oder einem Spritzgussverfahren, wobei auch ein Thixoforming eingesetzt werden kann, und andererseits können die Einsatzelemente 13 aus einem Stahlwerkstoff oder einem Buntmetall, selbstverständlich aber auch aus einem Aluminiumwerkstoff, hergestellt werden, und vor dem Fügen zwischen den Aufnahmeabschnitten 12 können diese beispielsweise spanend bearbeitet werden. Die Bearbeitung kann insbesondere auf Endbearbeitung ausgeführt werden, sodass nach dem Fügen der Rahmenhalbschalen 10 und 11 unmittelbar die Anbauteile an das Rahmensystem 1 angebracht werden können, die überwiegend oder ausschließlich über die Einsatzelemente 13 aufgenommen werden.

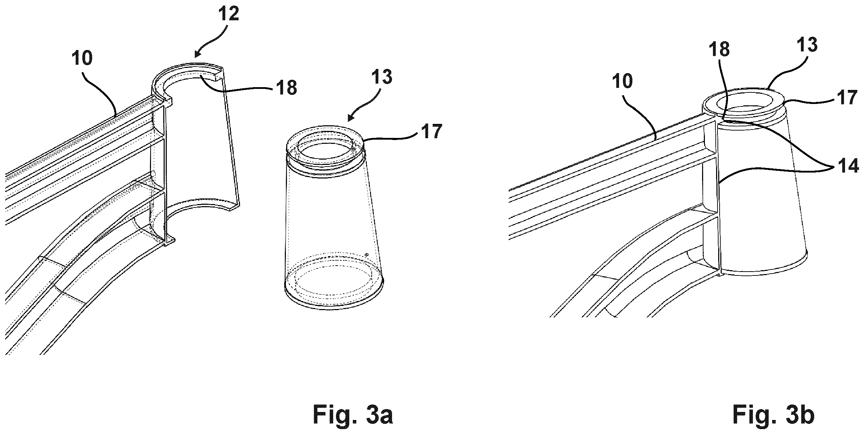

Figur 3a zeigt im Detail einen Aufnahmeabschnitt 12 an der ersten Rahmenhalbschale 10 mit einem umlaufenden Kragen 18 im Innenbereich des Aufnahmeabschnittes 12. Zugleich weist das dargestellte Einsatzelement 13, also beispielsweise ein Steuerrohr zur Aufnahme eines Steuersatzes, einen Flansch 17 auf, der komplementär zum Kragen 18 ausgeführt ist, um bei einem anschließenden Fügen zwischen dem Aufnahmeabschnitt 12 und dem Umfangsabschnitt des Einsatzelementes 13 eine höhere Fügefestigkeit zu erreichen.

Hierzu zeigt Figur 3b die stoffschlüssige Verbindung 14 zwischen dem Einsatzelement 13 und dem Aufnahmeabschnitt 12 an der Rahmenhalbschale 10. Dabei greift der Kragen 18 in den Flansch 17, und insbesondere in dieser Position entsteht eine hohe Fügefestigkeit. In nicht dargestellter Weise können auch kleine Öffnungen im Aufnahmeabschnitt 12 vorgesehen werden, beispielsweise um überflüssigen Klebstoff aus diesen austreten zu lassen.

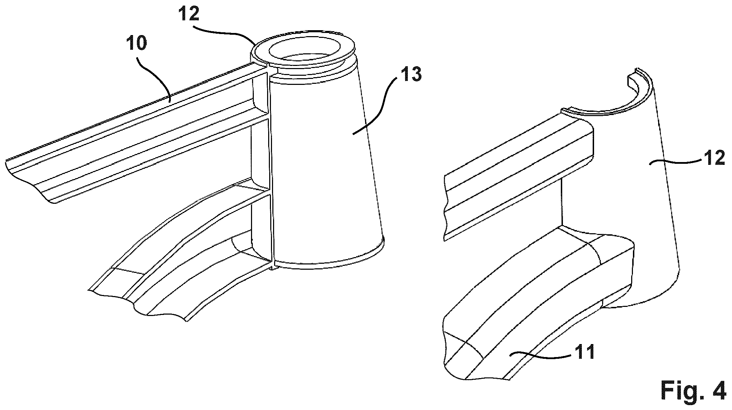

Figur 4 zeigt eine alternative Verbindungsweise des Einsatzelementes 13 an den Aufnahmeabschnitt 12 und insofern eine Verbindung mit der Rahmenhalbschale 10. Denn es ist denkbar, dass das Einsatzelement 13 bereits im Spritzguss oder Druckguss zur Herstellung der Rahmenhalbschale 10 eingesetzt wird, insbesondere in das Werkzeug zur Herstellung der Rahmenhalbschale 10 mit dem Aufnahmeabschnitt 12. So kann beispielsweise der Aluminiumwerkstoff der Rahmenhalbschale 10 und folglich auch des Aufnahmeabschnittes 12 mit dem Werkstoff des Einsatzelementes 13 eine Verbindung eingehen, indem dieser an den Werkstoff des Einsatzelementes 13 angegossen wird. Anschließend kann die weitere Rahmenhalbschale 11 mit dem Aufnahmeabschnitt 12 an den verbleibenden, noch freien Umfangsabschnitt des Einsatzelementes 13 angebracht werden.

In Zusammenhang mit Figur 4 kann auch vorgesehen werden, dass das Einsatzelement 13 bereits im Spritzguss oder Druckguss bei der Herstellung der Rahmenhalbschale 10 mit dem Aufnahmeabschnitt 12 einteilig im Urformverfahren hergestellt wird. Anschließend kann die zweite Rahmenhalbschale 11 an die erste Rahmenhalbschale 10 und an den verbleibenden freien Abschnitt des Einsatzelementes 13 angebracht werden, sodass der Aufnahmeabschnitt 12 der Rahmenhalbschale 11 diesen umschließt.

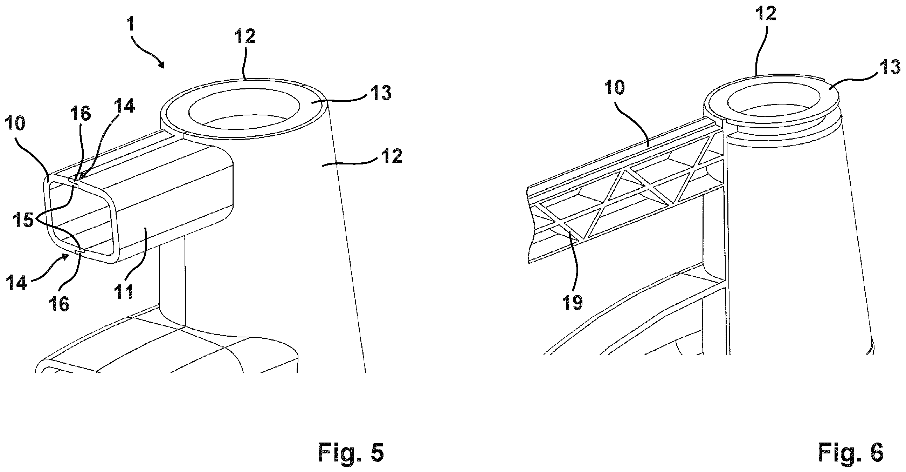

Figur 5 zeigt eine weitere Teilansicht des Rahmensystems 1 im Bereich eines vorderen Einsatzelementes 13 zur Aufnahme eines Steuersatzes.

Gezeigt sind zwei Rahmenhalbschalen 10 und 11, die aufeinander angeordnet und mittels einer stoffschlüssigen Verbindung 14 miteinander gefügt sind. Hierfür umschließen die beiden Aufnahmeabschnitte 12 das Einsatzelement 13 vollumfänglich. Die Ansicht zeigt, dass auch die Rahmenhalbschalen 10 und 11 selbst einen Fügebereich bilden, der so gestaltet ist, dass eine Fügefläche für die stoffschlüssige Verbindung 14 erzeugt wird, die größer ist als ein reiner Stumpfstoss. Dafür weist beispielhaft die erste Rahmenhalbschale 10 einen inneren Überlapprand 15 auf, während die zweite Rahmenhalbschale 11 einen äußeren Überlapprand 16 aufweist. Werden die beiden Rahmenhalbschalen 10, 11 aufeinander gebracht, so übergreift der äußere Überlapprand 16 den inneren Überlapprand 15. Die stoffschlüssige Verbindung 14, also beispielsweise eine Klebeverbindung, kann im damit vergrößerten Kontaktbereich der beiden Überlappränder 15, 16 ausgebildet werden.

Figur 6 zeigt ein Beispiel einer ersten Rahmenhalbschale 10 mit einen Aufnahmeabschnitt 12, in dem ein Einsatzelement 13 eingebracht ist. Das Ausführungsbeispiel der Rahmenhalbschale 10 weist eine innenseitige Rippenstruktur 19 auf, die in nicht näher gezeigter Weise auch in dem Innenbereich der zweiten Rahmenhalbschale 11 vorhanden sein kann. Die gezeigte Rippenstruktur 19 kann zur weiteren Aussteifung des Rahmensystems 1 dienen, es kann jedoch auch eine Innenstruktur in den Rahmenhalbschalen 10, 11 vorgesehen sein, die auch noch nach der Anordnung der Rahmenhalbschalen 10, 11 aufeinander Freiräume oder Führungskanäle bilden, um beispielsweise elektrische Leitungen, Hydraulikleitungen und/oder Steuerleitungen durch diese Hohlräume führen zu können. Die Rippenstruktur 19 in den Rahmenhalbschalen 10, 11 sind wie auch die Aufnahmeabschnitte so ausgestaltet, dass die Rahmenhalbschalen 10, 11 in einem einhubigen Gießwerkzeug hergestellt werden können, ohne dass Schieber oder dergleichen für Hinterschnitte erforderlich werden.

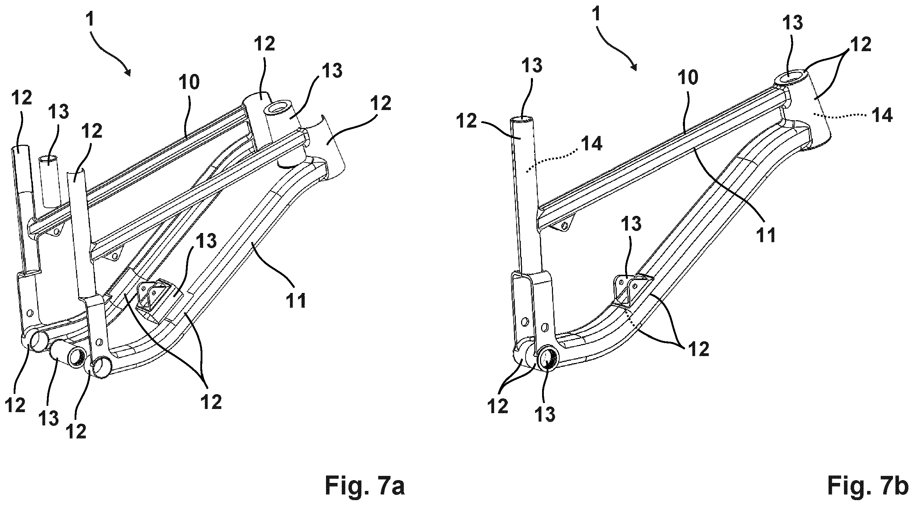

Die Figuren 7a und 7b zeigen ein weiteres Ausführungsbeispiel eines Rahmensystems 1 mit einer ersten Rahmenhalbschale 10 und einer zweiten Rahmenhalbschale 11, sowie mit jeweils mehreren Aufnahmeabschnitten 12 an den Rahmenhalbschalen 10, 11. Weiterhin sind mehrere Einsatzelemente 13 gezeigt, beispielsweise zur Aufnahme eines Steuersatzes, zur Aufnahme einer Sattelstange, zur Aufnahme eines Tretkurbellager oder auch zur Aufnahme eines Dämpfers für eine Hinterachsfederung. Insbesondere die dargestellte Aufnahme zur Dämpfung einer Hinterachsfederung bildet ein Einsatzelement 13, das im laufenden Unterrohr der ersten und zweiten Rahmenhalbschale 10, 11 Aussparungen bildet, wobei diese Aussparungen die Aufnahmeabschnitte 12 zur Aufnahme des Einsatzelementes 13 bilden.

Figur 7b zeigt das Rahmensystem 1 mit den aufeinander gefügten Rahmenhalbschalen 10, 11, wobei die beschriebenen Einsatzelemente 13 jeweils in ihrer Position fixiert sind. Die Fixierung erfolgt über die Aufnahmeabschnitte 12, wobei die innenseitige stoffschlüssige Verbindung 14 nicht näher gezeigt ist, siehe die Sattelstangenaufnahme. Am vorderseitigen Steuersatz ist beispielhaft die stoffschlüssige Verbindung 14 angedeutet, die zwischen der Innenseite der Aufnahmeabschnitte 12 und dem Außenumfang des Einsatzelementes 13 ausgebildet ist. Zusätzlich findet über der gesamten Kontaktlinie der beiden Rahmenhalbschalen 10, 11 eine Fügung statt, indem eine stoffschlüssige Verbindung 14, wie in Figur 5 dargestellt, ausgeführt wird.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht. Sämtliche aus den Ansprüchen, der Beschreibung oder den Zeichnungen hervorgehenden Merkmale und/oder Vorteile, einschließlich konstruktiver Einzelheiten oder räumlicher Anordnungen, können sowohl für sich als auch in den verschiedensten Kombinationen erfindungswesentlich sein.

### Bezugszeichenliste:

- 1: Rahmensystem

- 10: erste Rahmenhalbschale
- 11: zweite Rahmenhalbschale
- 12: Aufnahmeabschnitt
- 13: Einsatzelement
- 14: stoffschlüssige Verbindung
- 15: innerer Überlapprand
- 16: äußerer Überlapprand
- 17: Flansch
- 18: Kragen
- 19: Rippenstruktur

## Patentansprüche

1. Verfahren zur Herstellung eines Rahmensystems (1) für Zweiräder, wobei das Rahmensystem (1) in der Grundstruktur aus einer ersten Rahmenhalbschale (10) und einer zweiten Rahmenhalbschale (11) gebildet wird, die stoffschlüssig miteinander verbunden werden, wobei das Verfahren wenigstens die folgenden Schritte aufweist:
- Ausgestalten von Aufnahmeabschnitten (12) als einteiliger Abschnitt an wenigstens einer Rahmenhalbschale (10, 11);
- Bereitstellen oder Erzeugen wenigstens eines Einsatzelementes (13) zur Aufnahme von Anbauteilen an das Rahmensystem (1);
- Anordnen der ersten Rahmenhalbschale (10) und der zweiten Rahmenhalbschale (11) aneinander, wobei
- wenigstens einer der Aufnahmeabschnitte (12) das Einsatzelement (13) wenigstens abschnittsweise außenseitig umschließt und
- Erzeugen einer stoffschlüssigen Verbindung (14)
a) zwischen dem Aufnahmeabschnitt (12) und dem Einsatzelement (13) und
b) zwischen den beiden Rahmenhalbschalen (10, 11).

2. Verfahren nach Anspruch 1,
**dadurch gekennzeichnet,**
**dass** die erste Rahmenhalbschale (10) und/oder die zweite Rahmenhalbschale (11) mittels einem Urformverfahren hergestellt werden, mit dem die Aufnahmeabschnitte (12) als einteiliger Abschnitt an wenigstens einer Rahmenhalbschale (10, 11) ausgebildet werden.

3. Verfahren nach Anspruch 1 oder 2,
**dadurch gekennzeichnet,**
**dass** die stoffschlüssige Verbindung (14) zwischen dem Aufnahmeabschnitt (12) und dem Einsatzelement (13) und/oder zwischen den beiden Rahmenhalbschalen (10, 11) mittels einer Klebeverbindung, einer Schweißverbindung oder einer Lötverbindung gebildet wird.

4. Verfahren nach einem der Ansprüche 1 bis 3,
**dadurch gekennzeichnet,**
**dass** die beiden Rahmenhalbschalen (10, 11) aus einem metallischen Werkstoff, insbesondere aus einer Aluminiumlegierung, oder aus einem Kunststoff insbesondere im Spritzguss oder im Druckguss ausgebildet werden.

5. Verfahren nach einem der vorgenannten Ansprüche,
**dadurch gekennzeichnet,**
**dass** vor der Verbindung der Einsatzelemente (13) mit den beiden Rahmenhalbschalen (10, 11) die Einsatzelemente (13) spanend bearbeitet werden.

6. Verfahren nach einem der vorgenannten Ansprüche,
**dadurch gekennzeichnet,**
**dass** zwei an jeweiligen Rahmenschalen (10, 11) ausgebildete Aufnahmeabschnitte (12) so ausgestaltet und angeordnet werden, dass diese das Einsatzelement (13) auf sich gegenüberliegenden Positionen insbesondere halbschalenförmig umschließen.

7. Verfahren nach einem der vorgenannten Ansprüche,
**dadurch gekennzeichnet,**
**dass** die beiden Rahmenhalbschalen (10, 11) mit einem inneren Überlapprand (15) und einem äußeren Überlapprand (16) hergestellt werden, die beim Verbinden der beiden Rahmenhalbschalen (10, 11) in eine gegenseitige Überlappung gebracht werden, sodass die stoffschlüssige Verbindung (14) im Bereich der Überlappung ausgebildet wird.

8. Verfahren nach einem der vorgenannten Ansprüche,
**dadurch gekennzeichnet,**
**dass** die Einsatzelemente (13) aus einem Werkstoff bereitgestellt werden, der sich vom Werkstoff der beiden Rahmenhalbschalen (10, 11) unterscheidet und/oder dass die Einsatzelemente (13) aus einem Stahlwerkstoff bereitgestellt werden.

9. Verfahren nach einem der vorgenannten Ansprüche,
**dadurch gekennzeichnet,**
**dass** wenigstens ein Einsatzelement (13) im Urformverfahren mit einem der Aufnahmeabschnitte (12) zumindest teilweise umgossen wird, indem das Einsatzelement (13) vor dem Gießen in ein Urformwerkzeug eingelegt wird.

10. Verfahren nach einem der Ansprüche 1 bis 7,
**dadurch gekennzeichnet,**
**dass** wenigstens ein Einsatzelement (13) im Urformverfahren gemeinsam mit einem der Rahmenhalbschalen (10, 11) hergestellt wird.

11. Rahmensystem (1) für Zweiräder mit einer ersten Rahmenhalbschale (10) und einer zweiten Rahmenhalbschale (11) in der Grundstruktur, die stoffschlüssig miteinander verbunden sind,
**dadurch gekennzeichnet,**
**dass** an wenigstens einer Rahmenhalbschale (10, 11) zumindest ein Aufnahmeabschnitt (12) als einteiliger Abschnitt an der Rahmenhalbschale (10, 11) ausgebildet ist, wobei wenigstens ein Einsatzelement (13) zur Aufnahme von Anbauteilen an das Rahmensystem (1) vorgesehen ist, das von dem zumindest einen Aufnahmeabschnitt (12) wenigstens abschnittsweise außenseitig umschlossen ist, wobei
a) zwischen dem Aufnahmeabschnitt (12) und dem Einsatzelement (13) und
b) zwischen den beiden Rahmenhalbschalen (10, 11) eine stoffschlüssige Verbindung (14) erzeugt ist.

12. Rahmensystem (1) nach Anspruch 11,
**dadurch gekennzeichnet,**
**dass** die stoffschlüssige Verbindung (14) zwischen dem Aufnahmeabschnitt (12) und dem Einsatzelement (13) und/oder zwischen den beiden Rahmenhalbschalen (10, 11) mittels einer Klebeverbindung, einer Schweißverbindung oder einer Lötverbindung gebildet ist.

13. Rahmensystem (1) nach Anspruch 11 oder 12,
**dadurch gekennzeichnet,**
**dass** die beiden Rahmenhalbschalen (10, 11) aus einem metallischen Werkstoff, insbesondere aus einer Aluminiumlegierung, einem Verbundwerkstoff oder aus einem Kunststoff insbesondere im Spritzguss oder im Druckguss ausgebildet ist.

14. Rahmensystem (1) nach einem der Ansprüche 11 bis 13,
**dadurch gekennzeichnet,**
**dass** zwei an jeweiligen Rahmenschalen (10, 11) ausgebildete Aufnahmeabschnitte (12) das Einsatzelement (13) auf sich gegenüberliegenden Positionen insbesondere halbschalenförmig umschließen.

15. Rahmensystem (1) nach einem der Ansprüche 11 bis 14,
**dadurch gekennzeichnet,**
**dass** an dem wenigstens einen Einsatzelement (13) zumindest ein Flansch (17) oder eine Hinterschneidung ausgebildet ist, um die Verbindungswirkung der stoffschlüssigen Verbindung (14) zu verbessern.

## Geänderte Patentansprüche

### Geänderte Patentansprüche gemäss Regel 137(2) EPÜ.

1. Verfahren zur Herstellung eines Rahmensystems (1) für Zweiräder, wobei das Rahmensystem (1) in der Grundstruktur aus einer ersten Rahmenhalbschale (10) und einer zweiten Rahmenhalbschale (11) gebildet wird, die stoffschlüssig miteinander verbunden werden, wobei das Verfahren wenigstens die folgenden Schritte aufweist:
- Herstellen der ersten Rahmenhalbschale (10) und/oder der zweiten Rahmenhalbschale (11) mittels einem Urformverfahren, mit dem die Aufnahmeabschnitte (12) als einteiliger Abschnitt an wenigstens einer Rahmenhalbschale (10, 11) ausgebildet werden, wobei
- das Urformverfahren als ein Metall-Druckgussverfahren oder ein Kunststoff-Spritzgussverfahren oder ein Thixoforming ausgeführt wird, sodass die beiden Rahmenhalbschalen (10, 11) aus einem metallischen Werkstoff oder aus einem Kunststoff ausgebildet werden,
- Ausgestalten von Aufnahmeabschnitten (12) als einteiliger Abschnitt an wenigstens einer Rahmenhalbschale (10, 11);
- Bereitstellen oder Erzeugen wenigstens eines Einsatzelementes (13) zur Aufnahme von Anbauteilen an das Rahmensystem (1);
- Anordnen der ersten Rahmenhalbschale (10) und der zweiten Rahmenhalbschale (11) aneinander, wobei
- wenigstens einer der Aufnahmeabschnitte (12) das Einsatzelement (13) wenigstens abschnittsweise außenseitig umschließt und
- Erzeugen einer stoffschlüssigen Verbindung (14)
a) zwischen dem Aufnahmeabschnitt (12) und dem Einsatzelement (13) und
b) zwischen den beiden Rahmenhalbschalen (10, 11).

2. Verfahren nach Anspruch 1,
**dadurch gekennzeichnet,**
**dass** die stoffschlüssige Verbindung (14) zwischen dem Aufnahmeabschnitt (12) und dem Einsatzelement (13) und/oder zwischen den beiden Rahmenhalbschalen (10, 11) mittels einer Klebeverbindung, einer Schweißverbindung oder einer Lötverbindung gebildet wird.

3. Verfahren nach einem der Ansprüche 1 oder 2,
**dadurch gekennzeichnet,**
**dass** die beiden Rahmenhalbschalen (10, 11) aus einer Aluminiumlegierung ausgebildet werden.

4. Verfahren nach einem der vorgenannten Ansprüche,
**dadurch gekennzeichnet,**
**dass** vor der Verbindung der Einsatzelemente (13) mit den beiden Rahmenhalbschalen (10, 11) die Einsatzelemente (13) spanend bearbeitet werden.

5. Verfahren nach einem der vorgenannten Ansprüche,
**dadurch gekennzeichnet,**
**dass** zwei an jeweiligen Rahmenschalen (10, 11) ausgebildete Aufnahmeabschnitte (12) so ausgestaltet und angeordnet werden, dass diese das Einsatzelement (13) auf sich gegenüberliegenden Positionen insbesondere halbschalenförmig umschließen.

6. Verfahren nach einem der vorgenannten Ansprüche,
**dadurch gekennzeichnet,**
**dass** die beiden Rahmenhalbschalen (10, 11) mit einem inneren Überlapprand (15) und einem äußeren Überlapprand (16) hergestellt werden, die beim Verbinden der beiden Rahmenhalbschalen (10, 11) in eine gegenseitige Überlappung gebracht werden, sodass die stoffschlüssige Verbindung (14) im Bereich der Überlappung ausgebildet wird.

7. Verfahren nach einem der vorgenannten Ansprüche,
**dadurch gekennzeichnet,**
**dass** die Einsatzelemente (13) aus einem Werkstoff bereitgestellt werden, der sich vom Werkstoff der beiden Rahmenhalbschalen (10, 11) unterscheidet und/oder dass die Einsatzelemente (13) aus einem Stahlwerkstoff bereitgestellt werden.

8. Verfahren nach einem der vorgenannten Ansprüche,
**dadurch gekennzeichnet,**
**dass** wenigstens ein Einsatzelement (13) im Urformverfahren mit einem der Aufnahmeabschnitte (12) zumindest teilweise umgossen wird, indem das Einsatzelement (13) vor dem Gießen in ein Urformwerkzeug eingelegt wird.

9. Verfahren nach einem der Ansprüche 1 bis 6,
**dadurch gekennzeichnet,**
**dass** wenigstens ein Einsatzelement (13) im Urformverfahren gemeinsam mit einem der Rahmenhalbschalen (10, 11) hergestellt wird.

10. Rahmensystem (1) für Zweiräder mit einer ersten Rahmenhalbschale (10) und einer zweiten Rahmenhalbschale (11) in der Grundstruktur, die stoffschlüssig miteinander verbunden sind,
**dadurch gekennzeichnet,**
**dass**
- die erste Rahmenhalbschale (10) und/oder die zweite Rahmenhalbschale (11) mittels einem Urformverfahren bereitgestellt ist, mit dem die Aufnahmeabschnitte (12) als einteiliger Abschnitt an wenigstens einer Rahmenhalbschale (10, 11) ausgebildet sind, wobei
- das Urformverfahren als ein Metall-Druckgussverfahren oder ein Kunststoff-Spritzgussverfahren oder ein Thixoforming ausgeführt wurde, sodass die beiden Rahmenhalbschalen (10, 11) aus einem metallischen Werkstoff oder aus einem Kunststoff ausgebildet sind,
- wobei an wenigstens einer Rahmenhalbschale (10, 11) zumindest ein Aufnahmeabschnitt (12) als einteiliger Abschnitt an der Rahmenhalbschale (10, 11) ausgebildet ist, wobei wenigstens ein Einsatzelement (13) zur Aufnahme von Anbauteilen an das Rahmensystem (1) vorgesehen ist, das von dem zumindest einen Aufnahmeabschnitt (12) wenigstens abschnittsweise außenseitig umschlossen ist, wobei
a) zwischen dem Aufnahmeabschnitt (12) und dem Einsatzelement (13) und
b) zwischen den beiden Rahmenhalbschalen (10, 11) eine stoffschlüssige Verbindung (14) erzeugt ist.

11. Rahmensystem (1) nach Anspruch 10,
**dadurch gekennzeichnet,**
**dass** die stoffschlüssige Verbindung (14) zwischen dem Aufnahmeabschnitt (12) und dem Einsatzelement (13) und/oder zwischen den beiden Rahmenhalbschalen (10, 11) mittels einer Klebeverbindung, einer Schweißverbindung oder einer Lötverbindung gebildet ist.

12. Rahmensystem (1) nach Anspruch 10 oder 11,
**dadurch gekennzeichnet,**
**dass** die beiden Rahmenhalbschalen (10, 11) aus einer Aluminiumlegierung ausgebildet ist.

13. Rahmensystem (1) nach einem der Ansprüche 10 bis 12,
**dadurch gekennzeichnet,**
**dass** zwei an jeweiligen Rahmenschalen (10, 11) ausgebildete Aufnahmeabschnitte (12) das Einsatzelement (13) auf sich gegenüberliegenden Positionen insbesondere halbschalenförmig umschließen.

14. Rahmensystem (1) nach einem der Ansprüche 10 bis 13,
**dadurch gekennzeichnet,**
**dass** an dem wenigstens einen Einsatzelement (13) zumindest ein Flansch (17) oder eine Hinterschneidung ausgebildet ist, um die Verbindungswirkung der stoffschlüssigen Verbindung (14) zu verbessern.
